# EUROPEAN PATENT APPLICATION

(11) **EP 1 536 375 A1**
(43) Date of publication of application: **01.06.2005**
(21) Application number: 04747153.7
(22) Date of filing: 01.07.2004
(51) Int. Cl.: G06T 7/00

(54) **IMAGE INPUT DEVICE AND AUTHENTICATION DEVICE USING THE SAME**

(30) Priority: 22.08.2003 JP 2003298485
(71) Applicant: MATSUSHITA ELECTRIC INDUSTRIAL CO., LTD., Kadoma-shi, Osaka 571-8501 (JP)
(72) Inventor: FUJIMATSU, Takeshi, Yokohama-shi, Kanagawa 241-0801 (JP)
(74) Representative: Grünecker, Kinkeldey, Stockmair & Schwanhäusser Anwaltssozietät
(86) International application number: PCT/JP2004/009684
(87) International publication number: WO 2005/020149

(57) **Abstract**

An image input device is provided with: an image input part into which an image is entered; an image evaluation part which evaluates the image quality or subject of the image by using a predetermined threshold value; a cause determination part which determines the cause of image degradation corresponding to the image, based on the evaluation result of the image by the image evaluation part; an output part which outputs to the user a predetermined question; a cause input part into which an answer to the question is entered; and a cause comparison part which determines whether a match occurs or not between the cause of image degradation and the cause of image degradation corresponding to the answer. In a case where the cause comparison part determines that the cause of image degradation and the cause of image degradation corresponding to the answer do not match with each other, the image evaluation part changes the predetermined threshold value used to evaluate the image so that the cause of image degradation and the cause of image degradation corresponding to the answer can match with each other.

## Description

### TECHNICAL FIELD

The present invention relates to an authentication device which performs authentication of users to be authenticated by using information acquired from images of the users, and also relates to an image input device using the authentication device.

### BACKGROUND ART

In recent years, authentication devices to perform authentication of users by using as authentication information what is called biometrics information unique to each person have become commercially practical.

Above all, what is called the iris recognition method is well known. In the method, a user is authenticated by: entering an image containing the eye area of the user (hereinafter, the eye image) into an image input device; encoding an iris area in the eye image so as to generate predetermined authentication information; and comparing and collating the authentication information with previously registered authentication information (hereinafter, the registered authentication information). The iris recognition method is widely in practice because of its high reliability including a low false rejection rate and a low false acceptance rate (see, e.g. Japanese Patent No. 3307936).

Conventional iris recognition devices have the following problem. When, in spite of the presence of the registered authentication information of a user to be authenticated, no match occurs between the registered authentication information and authentication information generated from the eye image of the user (hereinafter, the case of not being authenticable), in other words, when the photographed eye image of the user is inadequate for authentication, it is necessary to retry photographing the user's eye image, causing the user to spend much time in authentication. In order to solve this problem, there are some iris recognition devices which have a means for analyzing a cause of image degradation (hereinafter, the cause analyzing means) in the case of not being authenticable, and a means for displaying an instruction to guide the user to an operation to eliminate the cause of image degradation (see, e.g. Japanese Patent Laid-Open Application No. 2000-60825).

However, in these conventional iris recognition devices, the cause of image degradation analyzed by the cause analyzing means does not necessarily match with the real cause of image degradation. Therefore, when the cause of image degradation found by the cause analyzing means differs from the real cause of image degradation, the real cause of image degradation is not always eliminated even if the user retries photographing his/her eye image by performing the operation to eliminate the cause of image degradation shown on the displaying means. As a result, the user is forced to retry photographing his/her eye image over and over again, and the eye image comparison and collation for authentication must be repeated in spite that the photographed eye images are adequate for authentication, thus resulting in spending much time in an authentication process.

### SUMMARY OF THE INVENTION

The present invention has been contrived in view of the aforementioned problem, and has an object of providing an image input device and an authentication device capable of accelerating the time to authenticate a user by reducing the number of times to retry photographing the user's eye image when the user fails to photograph an adequate eye image for authentication.

The image input device according to the present invention comprises: an image input part into which an image is entered; an image evaluation part which evaluates the image quality or subject of the image by using a predetermined threshold value; a cause determination part which determines the cause of image degradation corresponding to the image, based on the evaluation result of the image by the image evaluation part; an output part which outputs to the user a predetermined question to determine the cause of image degradation of the image; an answer input part into which an answer to the predetermined question is entered; and a cause determination part which determines whether a match occurs or not between the cause of image degradation and the cause of image degradation corresponding to the answer, wherein in a case where the cause determination part determines that the cause of image degradation and the cause of image degradation corresponding to the answer do not match with each other, the image evaluation part changes the predetermined threshold value used to evaluate the image so that the cause of image degradation and the cause of image degradation corresponding to the answer can match with each other.

In this structure, it is determined whether the cause of image degradation determined based on the evaluation result of the image by the image evaluation part and the cause of image degradation corresponding to the answer entered by the user or the like from outside match with each other or not. When they do not match, the threshold value used for image evaluation in the image evaluation part is changed to make these causes match with each other. This results in an image input device with an increased chance of entering an adequate image in a short time by reducing the number of times to retry entering the image.

The image evaluation part may comprise: an intensity determination part which determines whether the intensity of the image is within a first threshold range or not; a degree-of-focusing determination part which determines whether the degree of focusing of the image is within a second threshold range or not; a subject detection part which detects the presence or absence of an area which is assumed to be the subject of the image; and a high intensity area detection part which detects the presence or absence of a high intensity area exceeding a third threshold range from the image.

In this structure, it becomes possible to enter an adequate image for authentication since the image is within the first threshold range; has a degree of focusing within the second threshold range; contains a subject; and not contain an area exceeding the third threshold range.

The cause determination part may determine that the cause of image degradation is reflection due to external light when: the intensity determination part determines that the intensity of the image is within the first threshold range; the degree-of-focusing determination part determines that the degree of focusing of the image is within the second threshold range; the subject detection part detects the area which is assumed to be the subject of the image; and the high intensity area detection part determines that there is no area exceeding the third threshold range in the image.

In this structure, in a case where an image is photographed with an adequate intensity, degree of focusing and subject, and the subsequent process using the image is unsuccessfully done, the cause of image degradation can be determined to be reflection of light reflected from an object due to external light.

When the cause determination part determines that the cause of image degradation and the cause of image degradation corresponding to the answer do not match with each other, the image evaluation part may change the first threshold range, the second threshold range or the third threshold range.

In this structure, the threshold range is changed so that the cause of image degradation determined by the cause determination part and the cause of image degradation corresponding to the answer from the user or the like can match with each other. This results in an image input device with an increased chance of entering an adequate image in a short time by reducing the number of times to retry entering the image.

The image input device may further comprise: an irradiation part which irradiates the subject; and an irradiation output control part which controls the output of the irradiation part, wherein when the cause determination part determines that the cause of image degradation is reflection due to the external light, the irradiation output control part increases the output of the irradiation part.

In this structure, when the cause determination part determines that the cause of image degradation is reflection due to external light, an adequate image can be obtained by reducing the influence of the reflection of light reflected on the image from an object due to the external light by increasing the output of the irradiation part.

The image input device according to the present invention comprises: an image input part into which an image of a subject is entered; an intensity determination part which determines whether the intensity of the image is within a first threshold range or not; a degree-of-focusing determination part which determines whether the degree of focusing of the image is within a second threshold range or not; a subject detection part which detects the presence or absence of an area which is assumed to be the subject of the image; a high intensity area detection part which detects the presence or absence of a high intensity area exceeding a third threshold range from the image; and a cause determination part which determines that the cause of image degradation of the image is reflection due to external light when: the intensity determination part determines that the intensity of the image is within the first threshold range; the degree-of-focusing determination part determines that the degree of focusing of the image is within the second threshold range; the subject detection part detects the area which is assumed to be the subject of the image; and the high intensity area detection part determines that there is no area exceeding the third threshold range in the image.

In this structure, in a case where an image is photographed with an adequate intensity, degree of focusing and subject, and the subsequent process using the image is unsuccessfully done, the cause of image degradation can be determined to be reflection of light reflected from an object due to external light.

The authentication device according to the present invention comprises: an image input device according to the present invention; and an authentication process part which performs an authentication process by generating authentication information from an image outputted from the image evaluation part of the image input device, and by comparing the authentication information with registered authentication information previously registered.

In this structure, it becomes possible to realize an authentication device using an image outputted from the image input device according to the present invention. Even when an authentication process is unsuccessfully done, the cause of image degradation can be properly determined, thereby greatly reducing the number of times to retry entering the image. Thus the authentication device can perform the authentication process in a short time.

The image may be an eye image of a user to be authenticated, and the authentication process part may comprise: an authentication information generation part which generates the authentication information by encoding an iris area contained in the eye image; a storage part which stores the registered authentication information previously registered; and a comparison and collation part which compares and collates the registered authentication information stored in the storage part with the authentication information generated by the authentication information generation part.

In this structure, it becomes possible to realize an authentication device using the iris recognition method with high reliability.

As described hereinbefore, with the image input device and the authentication device according to the present invention, an authentication process can be successfully done in a short time by reducing the number of times to retry photographing an eye image when the user fails in photographing an adequate eye image.

### BRIEF DESCRIPTION OF THE DRAWINGS

Fig. 1 is a block diagram showing an example of a structure of an authentication device according to a first embodiment of the present invention.
Fig. 2 is a block diagram showing an example of the detailed structure of the authentication device according to the first embodiment of the present invention.
Fig. 3 is an example of an eye image in embodiments of the present invention.
Fig. 4 is a flowchart depicting operation steps of the authentication device according to the first embodiment of the present invention.
Fig. 5 is a view showing how to use the authentication device according to the first embodiment of the present invention.
Fig. 6 is a flowchart depicting authentication process steps of the authentication device according to the first embodiment of the present invention.
Fig. 7 is a cause determination table in the authentication device according to the embodiments of the present invention.
Fig. 8 is a block diagram showing an example of a structure of an authentication device according to a second embodiment of the present invention.
Fig. 9 is a flowchart depicting operation steps of the authentication device according to the second embodiment of the present invention.
Fig. 10 is a question-cause correspondence table in the authentication device according to the second embodiment of the present invention.

### DETAILED DESCRIPTION OF PREFERRED EMBODIMENTS

An image input device and an authentication device according to the present invention will be described in detail in the following embodiments with reference to accompanying drawings.

### FIRST EXEMPLARY EMBODIMENT

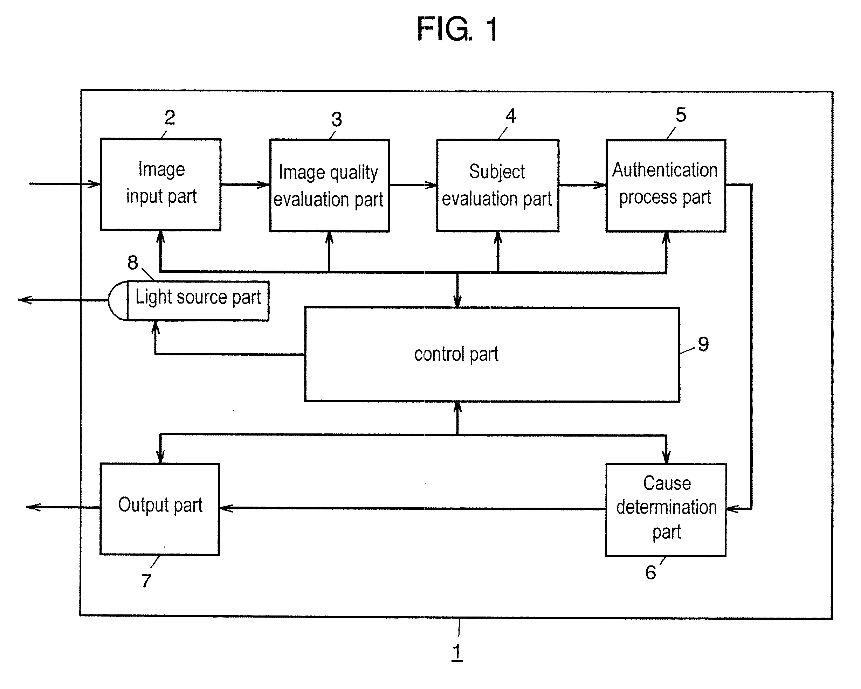

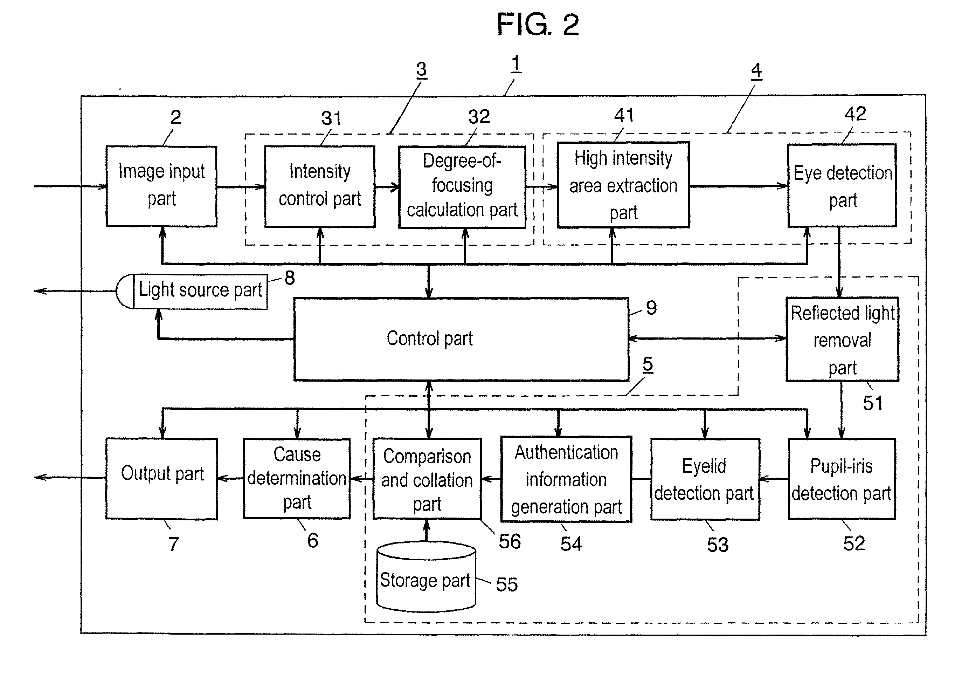

First of all, an authentication device according to a first embodiment of the present invention will be described. Fig. 1 is a block diagram showing an example of a structure of the authentication device according to the first embodiment of the present invention. Fig. 2 is a block diagram showing an example of the detailed structure of the authentication device according to the first embodiment of the present invention.

As shown in Fig. 1, authentication device 1 according to the first embodiment of the present invention includes: image input part 2 which photographs an eye of a user to be authenticated and generates an eye image; image quality evaluation part 3 which evaluates the image quality of the eye image captured by image input part 2; subject evaluation part 4 which evaluates a subject of the eye image; authentication process part 5 which performs authentication of the user by generating authentication information encoded by a predetermined method from an iris area in the eye image and comparing and collating the authentication information with the registered authentication information previously stored; cause determination part 6 which determines the cause of the failure in photographing the eye image based on the respective information outputted from image quality evaluation part 3, subject evaluation part 4 and authentication process part 5; output part 7 which outputs the cause of the failure determined by cause determination part 6 in the form of image or sound; light source part 8 which irradiates an area including the user's eye with near infrared radiation; and control part 9 which controls these component parts.

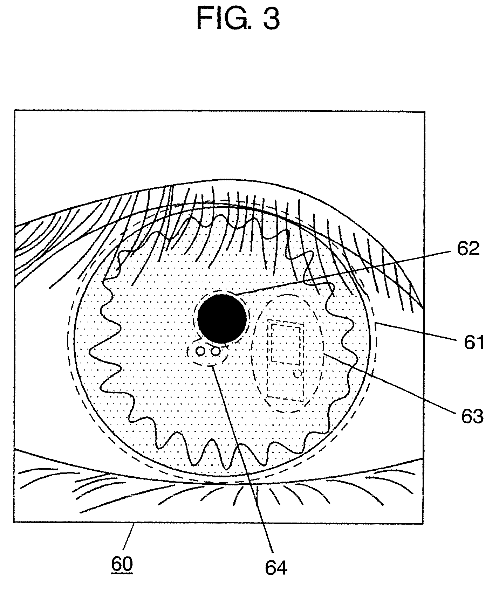

Image input part 2 photographs the user's eye and its vicinity. An example of eye image 60 photographed by the authentication device according to the embodiments of the present invention is shown in Fig. 3.

Image quality evaluation part 3 evaluates the image quality of eye image 60. As shown in Fig. 2, image quality evaluation part 3 includes: intensity control part 31 which controls intensity of eye image 60 so that the intensity of eye image 60 as a whole can be within a predetermined range; and degree-of-focusing calculation part 32 which calculates a degree of focusing by detecting a signal having a predetermined frequency component from eye image 60 and by integrating the signal. Intensity control part 31 has a function as an intensity determination part which transmits to control part 9 information indicative of whether the intensity of eye image 60 as a whole is higher or lower than the predetermined range when it is impossible to perform intensity control for setting the intensity of eye image 60 as a whole to within the predetermined range. Degree-of-focusing calculation part 32 has a function as a degree-of-focusing determination part which transmits a calculated degree of focusing to control part 9. As degree-of-focusing calculation part 32, it is possible to use a well known bandpass filter to detect the signal with the predetermined frequency component.

Subject evaluation part 4 includes: high intensity area extraction part 41 which determines the presence or absence of a high intensity area including an image that is caused by the reflection of light emitted from light source part 8 off the surface of an eyeglass lens, frame or the like, based on whether or not the intensity value of each pixel composing eye image 60 is within a predetermined threshold range, and, when the high intensity area is present, determines that the user wears glasses; and eye detection part 42 which detects whether eye image 60 contains an eye or not. The information about the presence or absence of a high intensity area extracted by high intensity area extraction part 41 and the information about the presence or absence of an eye detected by eye detection part 42 are transmitted to control part 9. Eye detection part 42 can detect the presence or absence of an eye in the image by performing pattern matching with a shape pattern having a predetermined size, or by binarizing eye image 60 thus calculating a histogram of a low intensity area. However, these are not the only eye detecting methods applicable in the present invention.

Authentication process part 5 includes: reflected light removal part 51 which removes or masks high intensity area 64 in eye image 60; pupil-iris detection part 52 which detects the positions of pupil 62 and iris 61 (central positions, outlines and the like) from eye image 60; eyelid detection part 53 which detects the position of an eyelid from eye image 60; authentication information generation part 54 which generates authentication information by encoding the image of iris 61 including masked high intensity area 64 by a predetermined method; storage part 55 which stores the registered authentication information previously registered; and comparison and collation part 56 which compares and collates the registered authentication information with the authentication information generated from eye image 60. It is possible to use, e.g. the method described in patent document 1 above to realize reflected light removal part 51, pupil-iris detection part 52, eyelid detection part 53, authentication information generation part 54 and comparison and collation part 56 included in authentication process part 5. However, the authentication device according to the present invention does not at all limit the method for the authentication process in authentication process part 5. It is possible to use other well known methods for authentication process such as pattern matching between a photographed image of iris 61 with images accumulated.

When the authentication process result obtained in authentication process part 5 indicates the case of not being authenticable, cause determination part 6 determines the cause of the failure in using eye image 60 for authentication, based on the information transmitted to control part 9 from image quality evaluation part 3, subject evaluation part 4 and authentication process part 5 in accordance with a method which will be described later.

Output part 7 provides the user with the cause determined by cause determination part 6 in the form of sound or image. On the other hand, control part 9 provides instructions to each component part in accordance with the cause determined. For example, when the determined cause is that eye image 60 contains reflection 63 of a landscape or the like off the cornea due to external light, control part 9 instructs light source part 8 to increase the amount of light in order to reduce the influence of reflection 63. When the amount of light emitted from light source part 8 is increased, the intensity has an upper limit so as not to damage the eye.

Light source part 8 can be a light source capable of emitting a near infrared beam (which indicates a light beam with a wavelength of 700 nm to 1000 nm), and can be a well known light source such as an LED.

Next, behavior of authentication device 1 according to the first embodiment of the present invention will be described as follows.

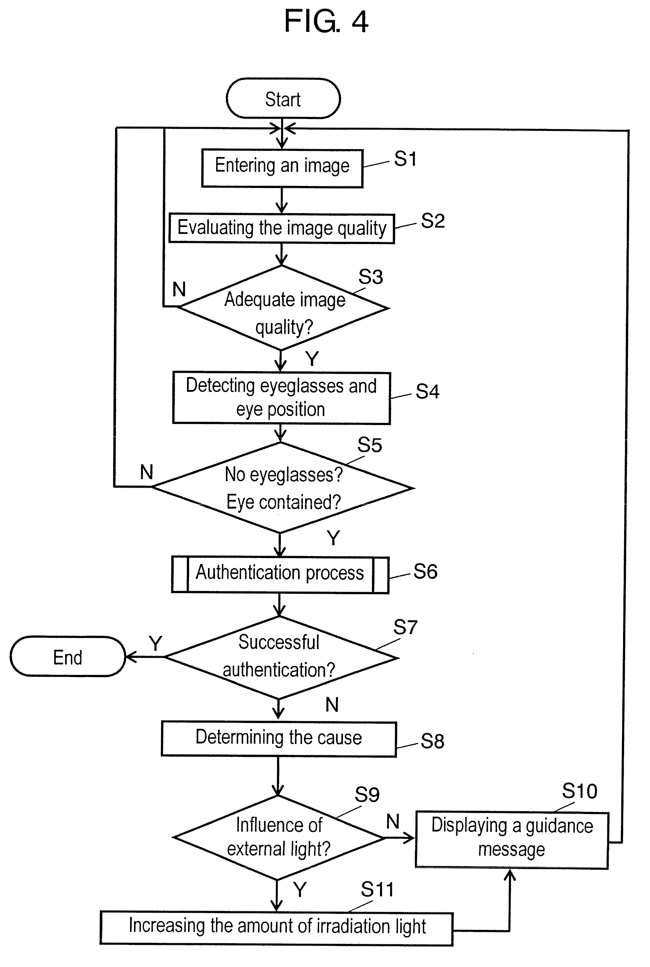

Fig. 4 is a flowchart depicting operation steps of authentication device 1 according to the first embodiment of the present invention.

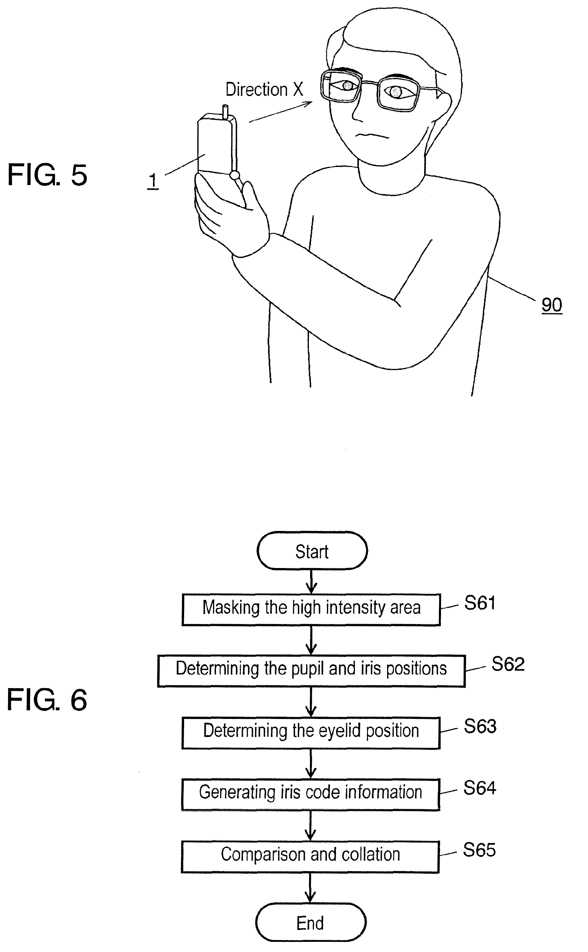

As shown in Fig. 5, authentication device 1 according to the embodiments of the present invention is a hand-held type authentication device which can be held in one hand by user 90 to be authenticated and be moved in direction X shown in Fig 5. While user 90 is moving authentication device 1 in direction X shown in Fig. 5, image input part 2 of authentication device 1 photographs images intermittently at predetermined time intervals. Eye image 60 with a high degree of focusing, which has been photographed when the distance between authentication device 1 and user 90 gets in the focal distance range of the optical system in image input part 2, is used for an authentication process.

More specifically, when user 90 instructs authentication device 1 to start an authentication process, control part 9 makes authentication device 1 start to photograph eye image 60 (S1). At this moment, control part 9 may light up light source part 8 to illuminate user 90; however, it is unnecessary when eye image 60 can be photographed clearly enough because of external light or the like. Since the photographing of eye image 60 is done continuously as described above, the photographed images do not necessarily contain an eye of user 90, or do not necessarily have an intensity within the threshold range or a degree of focusing higher than the prescribed threshold level, that is, are not necessarily with high contrast or in focus.

The image photographed by image input part 2 is transmitted to image quality evaluation part 3 to evaluate the image quality (S2). Intensity control part 31 of image quality evaluation part 3 performs intensity control for setting image intensity to the predetermined range. When the image intensity is too high or too low to control properly, intensity control part 31 transmits intensity information indicative of whether the image intensity is too low or too high to control part 9. Degree-of-focusing calculation part 32 takes out a high frequency component from the image and integrates it, thus calculating the degree of focusing of each image. The degree of focusing calculated is transmitted from degree-of-focusing calculation part 32 to control part 9. As the result of the image quality evaluation in image quality evaluation part 3, when the image intensity cannot be controlled by intensity control part 31 or when the degree of focusing is too low to reach the predetermined threshold level, control part 9 makes image input part 2 rephotograph the image (S3).

In image quality evaluation part 3, when the image intensity is controlled so as to be within the predetermined threshold range and when the degree of focusing exceeds the predetermined threshold level, the image is transmitted from image quality evaluation part 3 to subject evaluation part 4. Subject evaluation part 4 evaluates the subject contained in the image (S4). More specifically, high intensity area extraction part 41 extracts the presence or absence of a high intensity area that is caused by light reflected from the surface of a lens, frame or the like of the eyeglasses of user 90, and transmits the result to control part 9. In short, high intensity area extraction part 41 determines whether user 90 wears glasses or not. Eye detection part 42 determines whether or not an area corresponding to pupil 62 or iris 61 is detected from the image by using the aforementioned method. The detection result about pupil 62 or iris 61 is transmitted from eye detection part 42 to control part 9. Thus, eye detection part 42 determines whether or not the image contains an eye or not.

In subject evaluation part 4, when a high intensity area such as light reflected off the surface of an eyeglass lens or frame is detected from the image, or when there is no detection of an area which is assumed to be pupil 62 or iris 61 from the image, it is highly likely that the subject is inadequate, so that control part 9 makes image input part 2 rephotograph the image (S5).

In subject evaluation part 4, when there is no detection of a high intensity area from the image and when there is a detection of an area which is assumed to be pupil 62 or iris 61 from the image, the image is transmitted to authentication process part 5 to undergo a predetermined authentication process (S6). This authentication process will be described in detail as follows.

Fig. 6 is a flowchart depicting operation steps of the authentication process in authentication process part 5 of authentication device 1 according to the first embodiment of the present invention.

As shown in Fig. 6, when eye image 60 is entered to authentication process part 5, reflected light removal part 51 provides a removal or masking process to high intensity area 64 which cannot be used for authentication (S61). Unlike the area caused by the aforementioned light reflected from an eyeglass frame or the like, high intensity area 64 indicates an area mainly caused when the light emitted from light source part 8 is reflected off the cornea. When the removal or masking process is performed, reflected light removal part 51 transmits information on the size of high intensity area 64 to control part 9.

Next, pupil-iris detection part 52 positions pupil 62 and iris 61 in eye image 60 (S62). Information indicative of the positions of pupil 62 and iris 61 is transmitted from pupil-iris detection part 52 to control part 9.

Eyelid detection part 53 detects the position of an eyelid from eye image 60 and transmits it to control part 9 (S63). The image containing an iris area cut out of eye image 60 is transmitted to authentication information generation part 54, which generates authentication information by applying an image process to the image containing the iris area cut out of eye image 60 by using, e.g. the method described in patent document 1 (S64).

Comparison and collation part 56 compares and collates the authentication information generated by authentication information generation part 54 with the registered authentication information previously stored in storage part 55, and outputs the result to control part 9 (S65). Comparison and collation part 56 transmits, for example, a signal indicative of "1" when the authentication result indicates "authenticable", and a signal indicative of "0" when the authentication result is "not authenticable". As a method for the comparison and collation in comparison and collation part 56, the method described in patent document 1 can be used.

When the output from comparison and collation part 56 is a signal indicating "authenticable", control part 9 outputs it to output part 7 and launches a predetermined application or the like, thereby terminating the authentication process (S7).

When user 90 cancels the photographing of eye image 60 during the execution of Steps S1 to S6 because it takes time or for other reasons, or when the authentication result at Step S7 is "not authenticable", the information obtained from each component part is transmitted from control part 9 to cause determination part 6, which determines the cause of the result: "not authenticable" (S8).

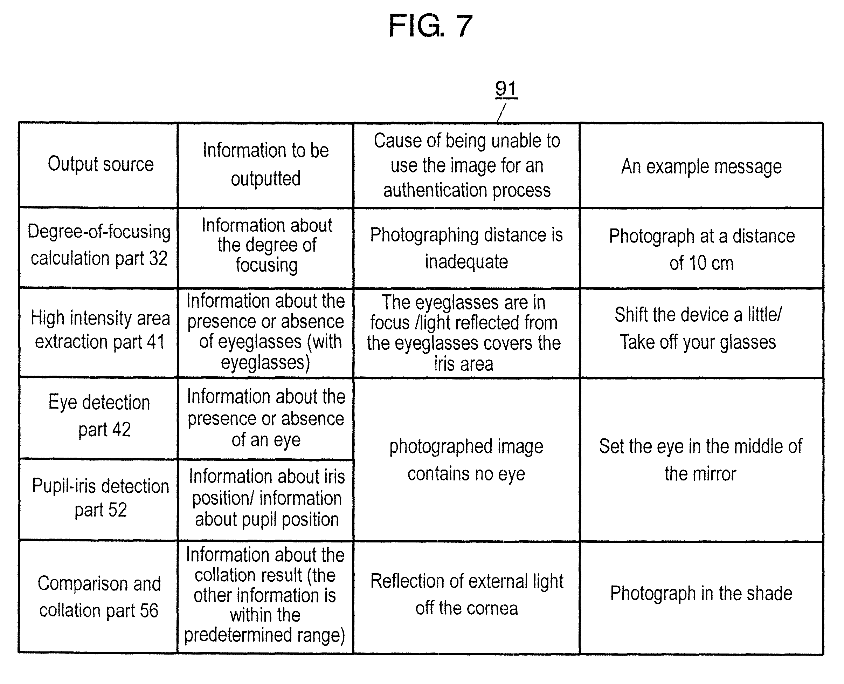

Cause determination part 6 includes cause determination table 91 as shown in Fig. 7. Fig. 7 is an example of cause determination table 91 owned by cause determination part 6 of the authentication device according to the embodiments of the present invention. As shown in Fig. 7, cause determination table 91 stores the information outputted from each component part in association with each cause of an image being unable to be used for authentication process (hereinafter, the cause of image degradation) when the information is not within the predetermined threshold range, that is, when the information indicates a deficient condition. Cause determination table 91 also stores messages to be outputted to output part 7 in the respective cases. Cause determination part 6 determines the cause of image degradation by taking the information stored in cause determination table 91 into consideration, and makes output part 7 output a message (S10) so that control part 9 makes image input part 2 rephotograph the image (S1).

At Step S8, when the cause of image degradation determined by cause determination part 6 is "reflection of an object off the cornea due to external light", control part 9 controls light source part 8 to increase the amount of light so as to reduce the influence of the reflection (S9). It is possible, at the same time, to make output part 7 output a guidance message to reduce the influence of the external light: "Photograph in the shade", or the like to user 90.

It goes without saying that when there are a plurality of light source parts 8, a spare light source part 8 may be lit when cause determination part 6 determines that the cause of image degradation is external light.

The following is a detailed description of cause determination table 91. In Fig. 7, when information about the degree of focusing outputted from degree-of-focusing calculation part 32 indicates a deficient condition, that is, the degree of focusing is not within the predetermined threshold range, the cause of image degradation is "the photographing distance is inadequate", and the guidance message can be, e.g. "Photograph at a distance of 10 cm" so as to show user 90 an appropriate distance.

When the information about the presence or absence of eyeglasses outputted from high intensity area extraction part 41 indicates a deficient condition, that is, "eyeglasses are worn", the cause of image degradation can be "the iris is out of focus because the eyeglasses are in focus" or the like, and the guidance message can be either "Shift the device a little" or "Remove your glasses".

When the information about the presence or absence of an eye outputted from eye detection part 42 indicates a deficient condition, that is, "no eye", or when the positional information about iris 61 or the positional information about pupil 62 outputted from pupil-iris detection part 52 indicates a deficient condition, that is, "no iris" or "no pupil", the cause of image degradation is "the image does not contain an eye", and the guidance message is "Photograph with the eye in the middle of the mirror".

In a case where the above-described respective information is within the respective adequate ranges, and the information about collation result outputted from comparison and collation part 56 exclusively indicates a deficient condition, that is, "not authenticable", cause determination part 6 determines that the cause of image degradation is "reflection of an object off the cornea due to external light", and the guidance message for that case is "Photograph in the shade".

In the aforementioned structure, authentication device 1 according to the first embodiment of the present invention can determine the cause of image degradation even when the authentication result says "not authenticable", and outputs a guidance message to guide user 90 to address adequately to each cause of image degradation. Thus, authentication device 1 has the excellent effect of creating an adequate eye image with a few number of times to retry when the user retries photographing his/her eye image.

Furthermore, in authentication device 1 according to the first embodiment of the present invention, it is possible to determine as the cause of image degradation the influence of reflection of an object off the cornea due to external light which has been conventionally difficult to be determined. In addition, when the cause of image degradation is determined to result from the influence of reflection of an object off the cornea due to external light, the amount of light emitted from light source part 8 is increased so that the adverse effect of the external light can be reduced to a level not interfering with authentication. At the same time, outputting an appropriate guidance message in such a case can provide the exceptional effect of reducing the number of times to retry when the user retries photographing his/her eye image.

As described hereinbefore, authentication device 1 according to the first embodiment of the present invention makes it possible to photograph an adequate eye image in a short time.

### SECOND EXEMPLARY EMBODIMENT

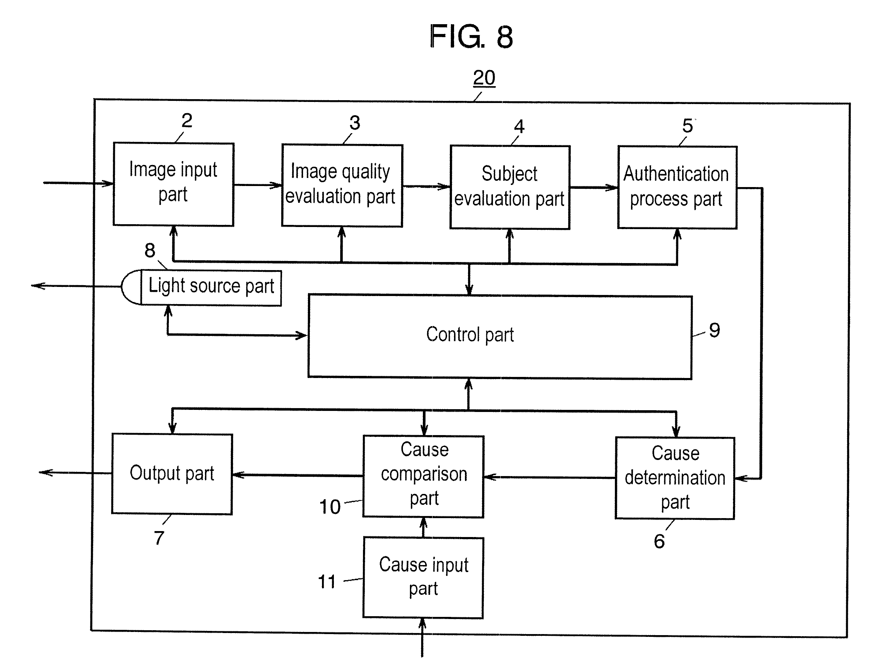

A structure and behavior of authentication device 20 as a second embodiment of the present invention will be described as follows. Fig. 8 is a block diagram showing an example of a structure of authentication device 20 according to the second embodiment of the present invention.

Authentication device 20 according to the second embodiment of the present invention differs from authentication device 1 described in the first embodiment in that it includes: cause input part 11 into which user 90 enters a cause of image degradation; and cause comparison part 10 which compares and collates the cause of image degradation entered to cause input part 11 with a cause of image degradation outputted by cause determination part 6.

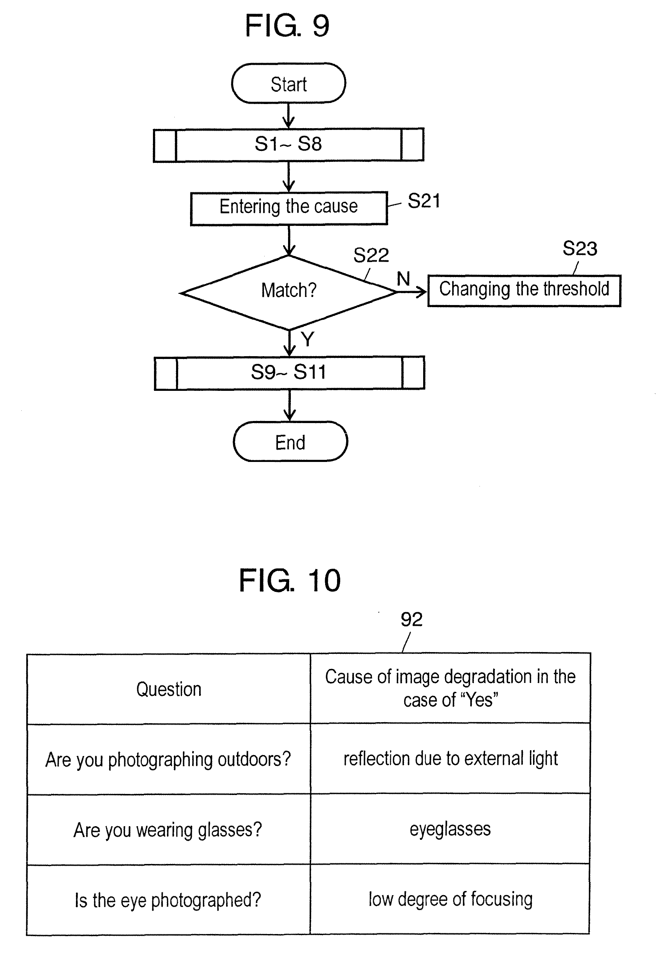

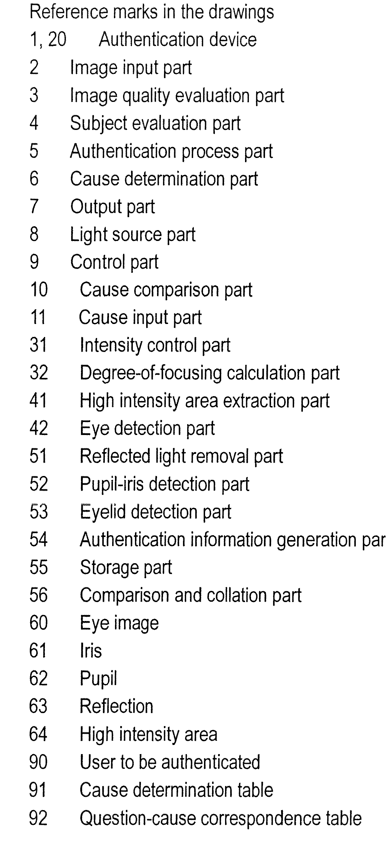

The behavior of authentication device 20 according to the second embodiment of the present invention will be described as follows. Fig. 9 is a flowchart depicting operation steps of authentication device 20 according to the second embodiment of the present invention.

As shown in Fig. 9, the main difference of authentication device 20 according to the second embodiment of the present invention from authentication device 1 according to the first embodiment shown in Fig. 4 is that there is a step of entering a cause of image degradation through cause input part 11 (S21) between Step S8 and Step S9, and that cause comparison part 10 has the function of comparing and collating the cause of image degradation entered through cause input part 11 with the cause of image degradation outputted by cause determination part 6.

In Fig. 9, when the process steps from Steps S1 to S8, that is, the cause determination step in cause determination part 6 is complete, control part 9 outputs a question such as "Answer the following question" to output part 7, and then user 90 enters "Yes" or "No" to the predetermined question (S21).

In regard with the input, cause input part 11 determines a cause of image degradation based on question-cause correspondence table 92 as shown in Fig. 10. Cause comparison part 10 compares and collates the cause of image degradation determined from the input of cause input part 11 with the cause of image degradation outputted from cause determination part 6, and outputs whether a match occurs or not to control part 9 and output part 7 (S22). When the output from cause comparison part 10 indicates a match between the cause of image degradation determined from the input of cause input part 11 and the cause of image degradation outputted from cause determination part 6, Steps S9 to S11 described in the first embodiment of the present invention are executed.

On the other hand, when the output from cause comparison part 10 indicates a mismatch between the cause of image degradation determined from the input of cause input part 11 and the cause of image degradation outputted from cause determination part 6, control part 9 changes the threshold range which is to be the reference to determine that the respective information outputted from each component part is adequate (S23). Changing the threshold range is done in such a manner that a match occurs between the cause of image degradation determined from the input of cause input part 11 and the cause of image degradation outputted from cause determination part 6.

For example, in a case where the user enters the answer "Yes" to cause input part 11 in response to the question: "Do you wear glasses?", the cause of image degradation is "reflection of light reflected from an eyeglass frame or lens" or "the eye image is out of focus because an eyeglass frame is in focus", that is, "eyeglasses". However, when the cause of image degradation determined by cause determination part 6 is not "eyeglasses", that is, the cause is "external light" or the like, the mismatch is due to the failure in detecting the eyeglasses of user 90 by high intensity area extraction part 41. In such a case, control part 9 lowers the upper limit of the threshold of intensity information to be extracted as a high intensity area by high intensity area extraction part 41 so as to increase the chance of detecting eyeglasses, thereby causing a match between the cause of image degradation determined by cause determination part 6 and the cause of image degradation entered to cause input part 11.

In such a structure, authentication device 20 according to the second embodiment of the present invention changes the threshold level which is the reference for determination in each component part in accordance with the cause of image degradation that user 90 has entered. This makes it possible to determine a more accurate cause of image degradation, thus further improving the chance of successful authentication when the eye image is rephotographed.

Although the embodiments of the present invention have used as authentication information the authentication information obtained by encoding the iris area contained in an eye image, the authentication device according to the present invention does not limit authentication information. It goes without saying that it is possible to use as authentication information well-known biometric information such as fingerprints, blood vessel patterns and faces.

### INDUSTRIAL APPLICABILITY

An image input device and an authentication device using the image input device according to the present invention can succeed in an authentication process in a short time by reducing the number of times to retry photographing an eye image. These devices are useful as an authentication device to perform authentication of a user by using information acquired from a photographed user's image, and an image input device used for the authentication device.

## Claims

1. An image input device comprising:
an image input part into which an image is entered;
an image evaluation part which evaluates image quality or subject of the image by using a predetermined threshold value;
a cause determination part which determines a cause of image degradation corresponding to the image, based on an evaluation result of the image by the image evaluation part;
an output part which outputs to a user a predetermined question to determine the cause of image degradation of the image;
an answer input part into which an answer to the predetermined question is entered; and
a cause determination part which determines whether a match occurs or not between the cause of image degradation and the cause of image degradation corresponding to the answer, wherein
in a case where the cause determination part determines that the cause of image degradation and the cause of image degradation corresponding to the answer do not match with each other, the image evaluation part changes the predetermined threshold value used to evaluate the image so that the cause of image degradation and the cause of image degradation corresponding to the answer can match with each other.

2. The image input device according to claim 1, wherein the image evaluation part comprises:
an intensity determination part which determines whether intensity of the image is within a first threshold range or not;
a degree-of-focusing determination part which determines whether a degree of focusing of the image is within a second threshold range or not;
a subject detection part which detects a presence or absence of an area which is assumed to be the subject of the image; and
a high intensity area detection part which detects a presence or absence of a high intensity area exceeding a third threshold range from the image.

3. The image input device according to claim 2, wherein
the cause determination part determines that the cause of image degradation is reflection due to external light when:
the intensity determination part determines that the intensity of the image is within the first threshold range;
the degree-of-focusing determination part determines that the degree of focusing of the image is within the second threshold range;
the subject detection part detects the area which is assumed to be the subject of the image; and
the high intensity area detection part determines that there is no area exceeding the third threshold range in the image.

4. The image input device according to claim 3, wherein when the cause determination part determines that the cause of image degradation and the cause of image degradation corresponding to the answer do not match with each other, the image evaluation part changes one of the first threshold range, the second threshold range and the third threshold range.

5. The image input device according to any one of claims 1 to 4 further comprising:
an irradiation part which irradiates the subject; and
an irradiation output control part which controls an output of the irradiation part, wherein
when the cause determination part determines that the cause of image degradation is reflection due to the external light, the irradiation output control part increases the output of the irradiation part.

6. An image input device comprising:
an image input part into which an image of a subject is entered;
an intensity determination part which determines whether intensity of the image is within a first threshold range or not;
a degree-of-focusing determination part which determines whether a degree of focusing of the image is within a second threshold range or not;
a subject detection part which detects a presence or absence of an area which is assumed to be the subject of the image;
a high intensity area detection part which detects a presence or absence of a high intensity area exceeding a third threshold range from the image; and
a cause determination part which determines that a cause of image degradation of the image is reflection due to external light when:
the intensity determination part determines that the intensity of the image is within the first threshold range;
the degree-of-focusing determination part determines that the degree of focusing of the image is within the second threshold range;
the subject detection part detects the area which is assumed to be the subject of the image; and
the high intensity area detection part determines that there is no area exceeding the third threshold range in the image.

7. An authentication device comprising:
an image input device according to any one of claims 1 to 6; and
an authentication process part which performs an authentication process by generating authentication information from an image outputted from an image evaluation part of the image input device, and by comparing the authentication information with registered authentication information previously registered.

8. The authentication device according to claim 7, wherein
the image is an eye image of a user to be authenticated;
the authentication process part comprises:
an authentication information generation part which generates the authentication information by encoding an iris area contained in the eye image;
a storage part which stores the registered authentication information previously registered; and
a comparison and collation part which compares and collates the registered authentication information stored in the storage part with the authentication information generated by the authentication information generation part.
